# DEMANDE DE BREVET EUROPEEN

(11) **EP 0 803 516 A2**
(43) Date de publication de la demande: **29.10.1997**
(21) Numéro de dépôt: 97400709.8
(22) Date de dépôt: 27.03.1997
(51) Int. Cl.: C08F 8/00, C08C 19/12, C08C 19/16

(54) **Procédé d'hydrohalogénation controlée de copolymères polyoléfine-diène et polymères en résultant**

(30) Priorité: 28.03.1996 FR 9603900
(71) Demandeur: LES DERIVES RESINIQUES ET TERPENIQUES, F-40100 Dax (FR)
(72) Inventeur: Lauilhe, Jean-Paul, 40990 Saint-Paul-Les-Dax (FR); Bonneau, Gustave, 64200 Biarritz (FR); Giraud, Dominique, 40180 HINX (FR); Dolatkhani, Marc, 33610 Cestas (FR); Deffieux, Alain, 33200 Bordeaux-Cauderan (FR); Cramail, Henri, 33350 Sainte Terre (FR)
(74) Mandataire: Le Guen, Gérard

(57) **Abrégé**

Cette invention a pour objet un copolymère polyoléfinique de type poly(oléfine-diène), caractérisé en ce qu'il comprend au moins un motif récurrent choisi parmi ceux de formule (I) et (II) 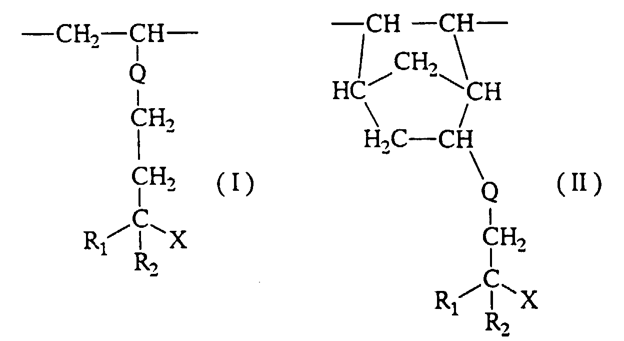
dans lesquelles Q est absent ou représente un groupe alkylène, linéaire ou ramifié, comportant au moins un atome de carbone,
R₁ et R₂ identiques ou différents, représentent chacun un groupe alkyle en C₁-C₈, et
X représente un atome d'halogène.

L'invention concerne également leurs produits de réaction avec des composés aromatiques ou avec des monomères de copolymérisation, ainsi que leurs procédés de préparation.

## Description

La présente invention concerne des copolymères polyoléfiniques, de type poly(oléfine-diène), comme par exemple des terpolymères d'éthylène-propylène-diène (EPDM).

Des copolymères obtenus par copolymérisation d'oléfine et de diène sont bien connus et utilisés dans tous les domaines d'application des polymères élastomères et thermoplastiques. Leurs représentants les plus répandus sont les terpolymères obtenus par polymérisation d'éthylène, de propylène et de diènes cycliques ou linéaires.

Il est connu dans l'état de la technique d'introduire des groupes fonctionnels dans des chaînes polymères afin de conférer au matériau de nouvelles caractéristiques, notamment de stabilité thermique, d'adhésivité, ou de compatibilité avec d'autres macromolécules dans des mélanges polymères.

Dans la plupart des cas, cette fonctionnalisation ne doit pas apporter de modifications majeures à la structure de la chaîne polymère de départ de façon à conserver intactes les propriétés désirées du matériau initial. Par exemple, il conviendra d'éviter que l'introduction de groupes fonctionnels dans une chaîne polymère linéaire ne conduise à la formation d'un réseau tridimensionnel, le matériau réticulé ayant des propriétés essentiellement différentes du matériau linéaire.

C'est ainsi que les diverses tentatives effectuées pour fonctionnaliser des copolymères EPDM se sont avérées infructueuses dans la mesure où les réactions de fonctionnalisation s'accompagnaient inévitablement de réactions secondaires entre chaînes polymères conduisant à la formation d'une fraction de réticulat dans le milieu réactionnel, les propriétés du matériau se trouvant ainsi irrémédiablement dégradées. Ces difficultés proviennent du fait que les milieux réactionnels comprenant des polymères sont particulièrement complexes et les réactions de fonctionnalisation qui sont pourtant bien connues en chimie organique classique ne peuvent pas être appliquées de façon équivalente en chimie macromoléculaire ; dans ces applications, le contrôle des réactions secondaires est crucial pour éviter la formation d'un gel ou l'évolution des masses molaires des produits de départ.

La présente invention s'est fixé pour but de fournir des copolymères poly(oléfine-diène) fonctionnalisés, ne comprenant pas même une fraction de réticulat, ces copolymères pouvant être utilisés comme tels ou servir à leur tour de point de départ à de nouvelles réactions de fonctionnalisation ou de couplage avec d'autres macromolécules, les produits résultants pouvant éventuellement être réticulés ultérieurement.

Au terme des recherches destinées à atteindre ce but, les présents inventeurs ont établi que certains copolymères polyoléfiniques présentant des chaînes latérales insaturées, dérivant notamment de la copolymérisation d'oléfines et de diènes aliphatiques non conjugués particuliers, étaient capables de subir certaine réaction d'hydrohalogénation pour conduire de façon contrôlée à des macromolécules modifiées mais non réticulées. Les fonctions halogéno ainsi introduites dans les copolymères peuvent à leur tour être converties en d'autres groupes fonctionnels ou servir de point d'ancrage pour d'autres chaînes polymères et conduire ainsi à la formation de copolymères greffés en peigne.

L'invention a donc pour premier objet un copolymère polyoléfinique, dérivé de la copolymérisation d'oléfines telles que notamment l'éthylène ou le propylène, caractérisé en ce qu'il comprend au moins un motif récurrent choisi parmi ceux de formule (I) et (II) 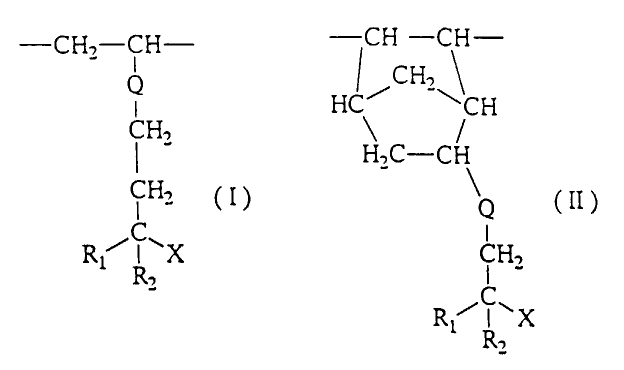 dans lesquelles Q est absent ou représente un groupe alkylène linéaire ou ramifié,
R₁ et R₂, identiques ou différents, représentent un groupe alkyle en C₁-C₈,
et X représente un atome d'halogène.

Les copolymères de l'invention peuvent éventuellement comprendre également au moins un motif récurrent choisi parmi ceux de formule (III) et (IV), 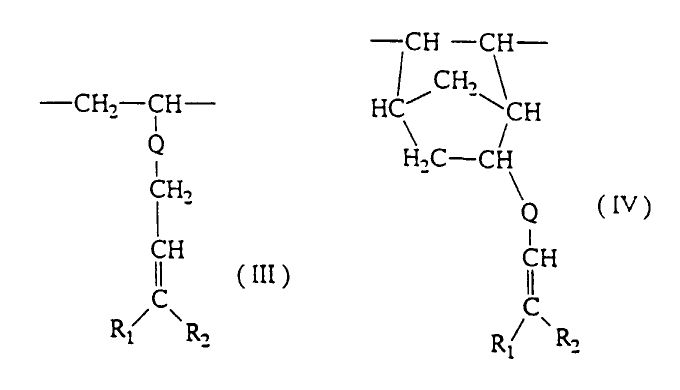 dans lesquelles Q, R₁ et R₂ ont les significations indiquées précédemment.

La teneur en motifs de formule (III) et (IV) par rapport au nombre total de motifs de formules (I) à (IV) dans les copolymères selon l'invention, notée (III +IV)/(I+II+III+IV), est avantageusement de 0 à 99%.

De préférence, sans toutefois s'y limiter, la proportion totale des motifs récurrents de formules (I) à (IV) représente 1 à 10 % en moles de la quantité totale de motifs récurrents dans ledit copolymère.

Des copolymères préférés selon l'invention comprennent en outre au moins un autre motif récurrent dérivé d'un monomère choisi parmi l'éthylène et le propylène. Avantageusement, les copolymères comprennent à la fois un motif récurrent dérivé de l'éthylène et un motif récurrent dérivé du propylène.

Ainsi, des copolymères particulièrement préférés selon l'invention comprennent de 0 à 99,9 % en mol de motifs dérivés d'éthylène de formule (-CH₂-CH₂-), de 0 à 99,9 % en mol de motifs dérivés de propylène de formule 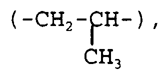 et de 0,1 à 10 % en mol au total de motifs de formule (I), (II) , (III) et (IV) telles que définies précédemment.

Dans les motifs récurrents de formule (I) à (IV), le groupe alkylène Q éventuellement présent peut être tout groupe alkylène linéaire ou ramifié ayant au moins un atome de carbone. Le nombre total d'atomes de carbone dans le groupe Q n'est pas déterminant, et varie en fonction du degré de ramification de ce dernier. En pratique, on préfère les groupes Q ayant moins de 100 atomes de carbone.

Des groupes Q préférés sont les groupes méthylène, éthylène, propylène, butylène, pentylène, hexylène, heptylène, octylène, éventuellement substitués par au moins un groupe alkyle en C₁-C₈.

Les groupes R₁ et R₂ présents dans les motifs de formule (I) à (IV) peuvent être tout groupe alkyle en C₁-C₈, en particulier méthyle, éthyle, propyle, butyle, pentyle, hexyle, heptyle, octyle, linéaires ou ramifiés.

Parmi les motifs de formule (I), on préfère particulièrement les motifs (5-méthyl 5-halogèno hexyl)-éthylène, éventuellement substitués, comme par exemple des motifs (3,5-diméthyl 5-halogénohexyl)éthylène ou (1,5-diméthyl 5-halogénohexyl)éthylène.

Les motifs de formule (III) préférés correspondants sont les motifs (5-méthyl 4-hexényl) éthylène qui proviennent de la copolymérisation de 7-méthyl octa-1,6-diène.

Des motifs substitués également préférés sont les motifs (3,5-diméthyl 4-hexényl)éthylène provenant de la copolymérisation de 5,7-diméthyl octa-1,6-diéne, et (1,5-diméthyl 4-hexényl))éthylène provenant de la copolymérisation de (3,7-diméthyl octa-1, 6-diéne) .

Dans les motifs récurrents de formule (I) et (II), l'atome d'halogène X peut être avantageusement choisi parmi le chlore, le brome, l'iode et le fluor ; de préférence, X représente un atome de chlore ou de brome.

Ces polymères oléfiniques halogénés qui, comme on le verra par la suite, sont susceptibles d'être obtenus à partir de copolymères polyoléfine-diène hydrocarbonés appropriés par hydrohalogénation, présentent l'avantage de pouvoir être obtenus sans réticulation des matières de départ et de répondre ainsi à la demande de copolymères oléfiniques, notamment de type EPDM, fonctionnalisés linéaires.

Une caractéristique supplémentaire avantageuse des copolymères oléfiniques halogénés selon l'invention réside donc dans le fait qu'ils ne comportent pas de fraction réticulée.

Les copolymères halogénés selon l'invention se caractérisent par une meilleure adhésivité et une plus grande stabilité thermique, ce qui facilite leur mise en oeuvre notamment dans le domaine des pneumatiques.

L'invention a également pour objet des procédés de préparation des copolymères décrits précédemment.

A cet effet, l'invention a pour objet un procédé pour la préparation d'un copolymère poly(oléfinediène) A comprenant au moins un motif récurrent choisi parmi ceux de formule (I) et (II) 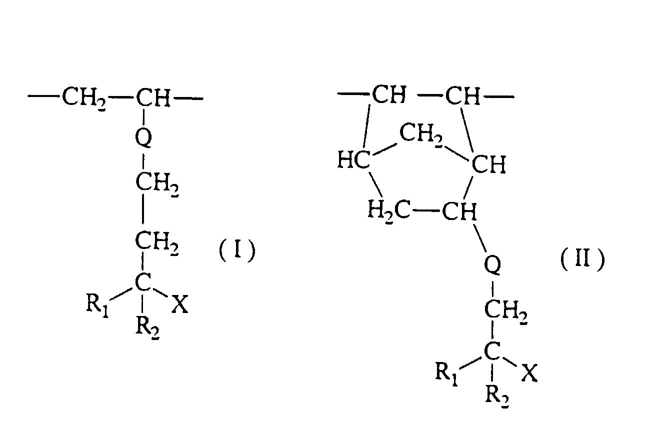 dans lesquelles R₁, R₂ et Q sont tels que définis précédemment et X représente un atome d'halogène,
et comprenant éventuellement un motif récurrent choisi parmi ceux de formule (III) et (IV), 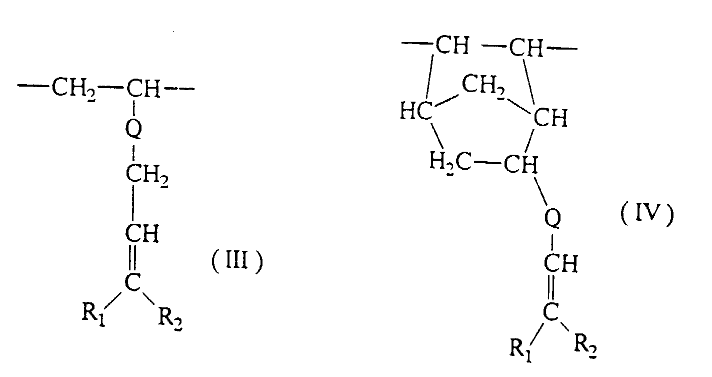 procédé caractérisé en ce que l'on soumet à une hydrohalogénation contrôlée un copolymère poly(oléfine-diène) T dont le motif récurrent dérivé de diène répond à au moins l'une des formules (III) et (IV) ci-dessus, en faisant réagir le copolymère T avec du tétrahalogénure d'étain Snx₄,où X a la signification précédente, et un silane R₃SiH où R₃ représente un groupe alkyle, de préférence en C₁-C₈.

Avantageusement, la réaction est conduite dans un hydrocarbure en C₅-C₁₂, par exemple dans l'heptane.

De préférence, la réaction est conduite à température ambiante, notamment de 10 à 40°C.

De manière avantageuse, le rapport molaire au tétrahalogénure d'étain et du silane utilisé SnX₄/R₃SiH, est de 0,5 à 2, de préférence de l'ordre de 1.

Le taux d'hydrohalogénation des insaturations présentes dans le motif de formule (III) et/ou (IV) est contrôlé par la quantité de silane et de tétrahalogénure d'étain introduite.

Ainsi, lorsque la quantité (en moles) de silane introduite est supérieure ou égale à 7 fois le nombre total (en moles) de motifs (III) et (IV) l'hydrohalogénation est totale et le produit de la réaction ne contient plus de motifs récurrents dérivés de diène de formule (III) ou (IV).

Par ailleurs, lorsque la quantité de silane (en moles) introduite est inférieure à 7 fois le nombre total (en moles) de motifs (III) et (IV) du polymère de départ, l'hydrohalogénation est partielle et le produit final comprend comme motifs récurrents dérivés de diène, à la fois des motifs de formule (I) et/ou (II) , et de formule (III) et/ou (IV).

Il a été observé que le traitement du copolymère initial par cette méthode ne conduit à aucune modification des masses molaires, c'est-à-dire à aucune réaction de réticulation, de couplage de chaînes ou de dégradation de chaînes.

L'invention a également pour objet un autre procédé pour la préparation d'un copolymère poly(oléfinediène) A comprenant un motif récurrent choisi parmi ceux de formule (I) et (II) 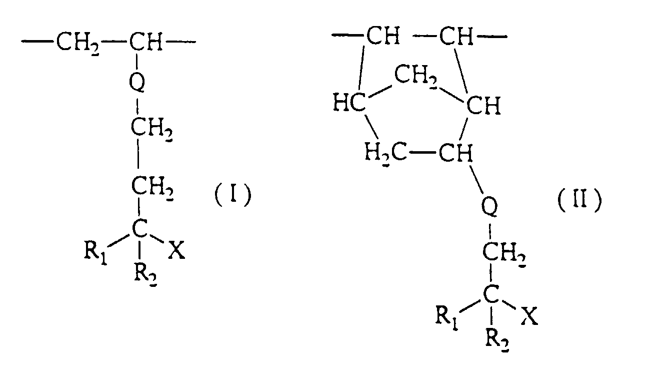 et comprenant éventuellement un motif récurrent choisi parmi ceux de formule (III) et (IV), 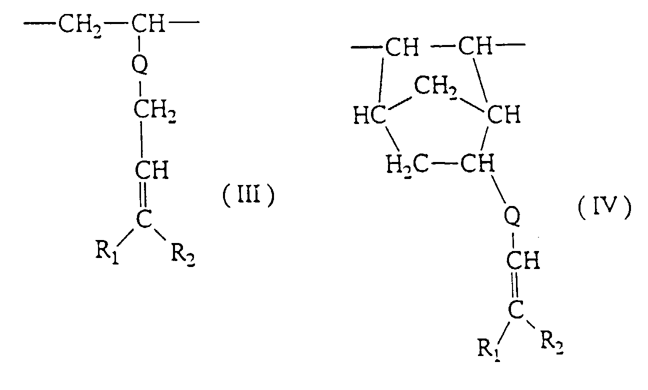 procédé caractérisé en ce que l'on soumet à une hydrohalogénation contrôlée un copolymère poly(oléfine-diène) T dont le motif récurrent dérivé de diène répond à au moins l'une des formules (III) et (IV) ci-dessus,
en le faisant réagir avec un acide halohydrique HX où X a la signification précédente,
en présence de dichlorure d'étain Sncl₂, en quantité catalytique.

La réaction a avantageusement lieu en solution dans un hydrocarbure en C₅-C₁₂. La température de réaction est avantageusement choisie de 30 à 180°C, notamment à environ 40°C.

Le taux d'hydrohalogénation des insaturations peut être maîtrisé en fonction du temps de réaction, ainsi que de la quantité du dichlorure d'étain et d'acide halohydrique, pour fournir de façon contrôlée un copolymère dans lequel les motifs récurrents dérivés de diène sont exclusivement constitués de motifs de formule (I) et/ou (II) ou bien comprennent à la fois des motifs de formule (I) et/ou (II) et de formule (III) ou (IV). Ces paramètres peuvent être ajustés aisément de manière classique en fonction du résultat désiré.

Il a également été observé que le traitement du polymère de départ par cette méthode ne conduit à aucune formation de gel ni d'évolution des masses molaires signe de réactions secondaires.

Dans ce qui précède, on entend par quantité catalytique une quantité s'élevant à moins de 5 % en mol par rapport au nombre total (en mol) de motifs de formule (III) et (IV) initiaux.

Pour ces deux procédés de préparation, l'hydrohalogénation est régiosélective et conduit uniquement à la fixation de l'atome d'halogène sur l'atome de carbone portant les deux substituants R₁ et R₂.

Les copolymères halogénés selon l'invention sont également utiles comme produit de départ pour d'autres copolymères fonctionnalisés, par exemple pour transformer les motifs récurrents de formule (I) en motifs récurrents de formule (V), et respectivement les motifs de formule (II) en motifs de formule (VI) 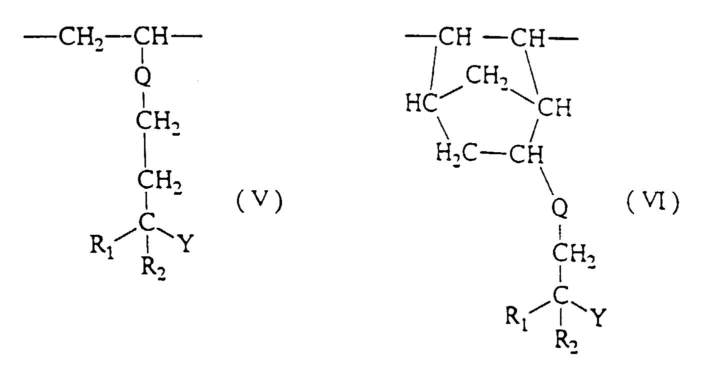 où Y représente un groupe aryle, hydroxyle, ou un ester d'acide carboxylique,
ou de transformer les motifs de formule (I) en motifs de formule (VII), et respectivement les motifs de formule (II) en motifs de formule (VIII) 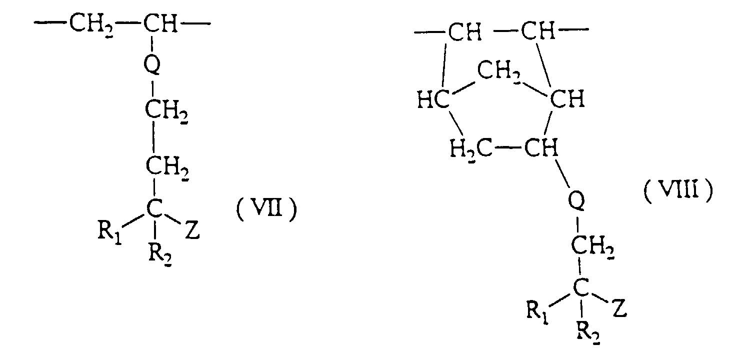 où Z représente une chaîne polymère.

L'invention a donc également pour objet un copolymère polyoléfinique, de type poly(oléfine-diène), caractérisé en ce qu'il comprend au moins un motif récurrent choisi parmi ceux de formule (V) et (VI) 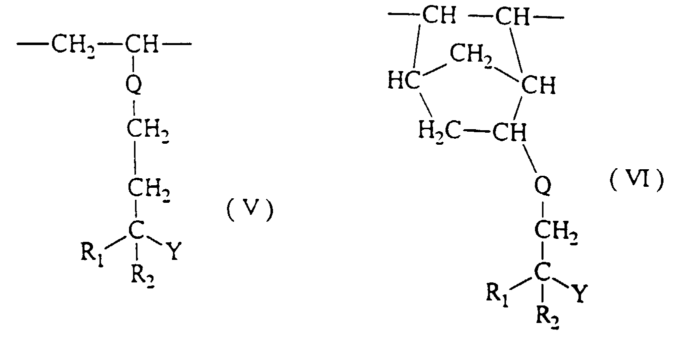 dans lesquelles Q, R₁ et R₂ sont tels que définis précédemment, et
Y est choisi parmi :
(i) un groupe hydroxy ;
(ii) un groupe R₃COO- où R₃ est un groupe alkyle en C₁-C₈, éventuellement substitué ; et
(iii) un groupe aryle mono ou polycyclique en C₆-C₂₂, éventuellement substitué par un atome d'halogène ou un groupe alkyle en C₁-C₈, hydroxy, hydroxyalkyle en C₁-C₈, alcoxy en C₁-C₈, acyloxy en C₂-C₉,halogénoalkyle en C₁-C₈, aryloxy mono ou polycyclique en C₆-C₂₂, ou par un groupe de formule -(W₁-W₂)ₚ-H où W₁ désigne un groupe éthylène, éventuellement substitué par un groupe alkyle en C₁-C₈, alcényle en C₂-C₁₂, aryle en C₆-C₂₂, alkylaryle en C₇-C₃₀ ou aralkyle en C₇-C₃₀, W₂ désigne un groupe arylène en C₆-C₂₂, éventuellement substitué par un groupe alkyle en C₁-C₈, aryle en C₆-C₂₂, alkylaryle en C₇-C₃₀ ou aralkyle en C₇-C₃₀ et p est un entier de 1 à 10.

Lorsque Y représente (ii) un groupe acyloxy de formule R₃COO-, R₃ peut être choisi parmi les groupes méthyle, éthyle, propyle, butyle, pentyle, hexyle, heptyle et octyle, linéaires ou ramifiés, éventuellement substitués.

Les copolymères B hydroxylés ou estérifiés présentent des caractéristiques avantageuses dues à leur fonctionnalisation, notamment des propriétés améliorées telles que l'adhésivité, l'hydrophilie ou la compatibilité avec divers matériaux.

Lorsque Y représente (iii) un groupe aryle, il est de préférence un groupe phényle, éventuellement substitué par au moins un substituant choisi notamment parmi les groupes hydroxy, alkyle en C₁-C₈, hydroxyalkyle en C₁-C₈, halogénoalkyle en C₁-C₈, alcoxy en C₁-C_{8,} et aryloxy mono ou polycyclique en C₆-C₂₂.

Ces copolymères arylés se caractérisent également par des propriétés améliorées, notamment à titre indicatif et non limitatif, au niveau de la stabilité thermique et de l'adhésivité. En fonction des groupes substituant le noyau aromatique, il est possible de condenser, dans des conditions appropriées d'autres molécules, ou bien de convertir ces groupes fonctionnels en des groupements réticulables.

Les copolymères B peuvent comprendre un seul ou bien plusieurs motifs dérivés de diène de formule (V) dans laquelle Y a des significations différentes parmi celles énoncées précédemment. De même, ils peuvent comprendre un seul ou bien plusieurs motifs dérivés de diène de formule (VI) dans laquelle Y a des significations différentes parmi celles énoncées précédemment. On pourra également trouver différents motifs de formule (V) et (VI) dans le même copolymère.

En variante, les polymères comprenant au moins un motif de formule (V) ou (VI) peuvent comprendre en outre au moins un motif choisi parmi ceux de formule (I) à (IV) présentées ci-dessus, les groupes Q, R₁ et R₂ ayant de préférence la même signification dans chacun des motifs de formule (I) à (IV).

L'invention a également pour objet un procédé pour la préparation d'un tel copolymère poly(oléfinediène) B comprenant au moins un motif récurrent choisi parmi ceux de formule (V) et (VI) 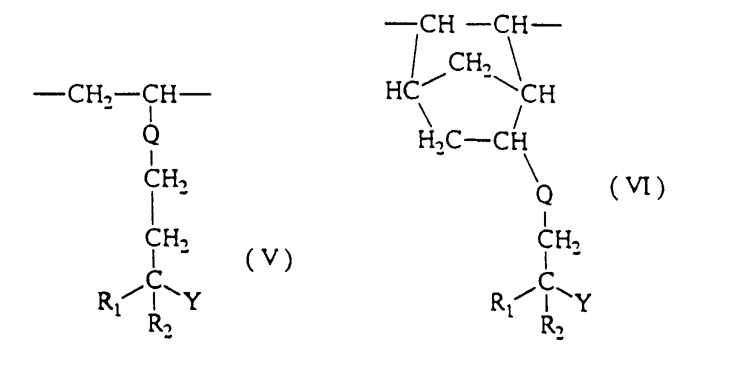 dans lesquelles R₁, R₂, Q et Y sont tels que définis précédemment,
et comprenant éventuellement un motif récurrent choisi parmi ceux de formule (III) et (IV) 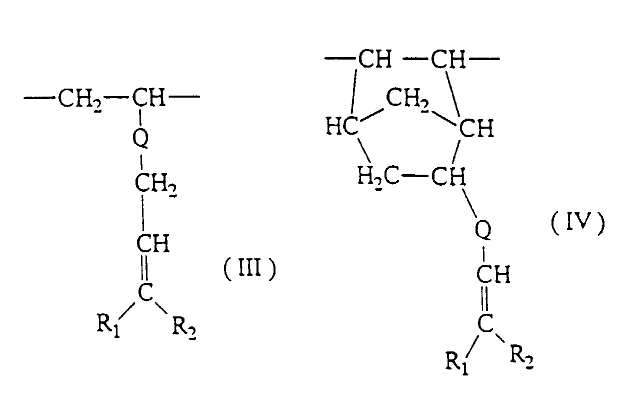 en faisant réagir un copolymère poly(oléfine-diène) A comprenant au moins un motif récurrent choisi parmi ceux de formule (I) et (II) dans lesquelles X représente un atome d'halogène, avec un composé de formule YH, dans laquelle Y a la signification précédente, en présence d'un catalyseur approprié.

Lorsque Y représente un groupe hydroxy (i) ou acyloxy R₃COO- (ii), le catalyseur de réaction peut être choisi parmi tous les catalyseurs connus pour leur activité dans des réactions d'hydroxylation. De préférence, on utilise un catalyseur de formule AₐB_{b} dans laquelle A est un élément choisi parmi Zn, Ca, Mg, Mn et Co, à l'état métallique ou cationique, B représente un atome d'oxygène ou un anion minéral ou organique, a est un nombre entier de 1 à 3 et b est un nombre entier de 1 à 3.

La réaction entre le copolymère A et le composé de formule YH, qui représente de l'eau H₂O dans le cas (i) ou un acide carboxylique R₃COOH dans le cas (ii), est avantageusement conduite dans un solvant hydrocarboné, de préférence en C₅-C₁₂.

La température de réaction peut être choisie de manière avantageuse de 20 à 100°C.

Lorsque y représente un groupe aryle (iii) éventuellement substitué, le catalyseur de réaction est de préférence un acide de Lewis.

La réaction a lieu avantageusement en solution dans un solvant hydrocarboné, de préférence en C₅-C₁₂.

Dans certains cas, le composé aromatique YH peut constituer lui-même le solvant réactionnel, lorsqu'il a un pouvoir solubilisant suffisant vis-à-vis du copolymère A de départ. C'est le cas notamment du toluène.

La température du milieu réactionnel est de préférence de -50 à 90°C.

L'acide de Lewis peut être choisi parmi tous ceux connus pour catalyser les réactions de Friedel et Crafts. On citera par exemple AlCl₃ pour des réactions conduites à des températures inférieures à-30°C. Lorsque la température est choisie supérieure à -30°C, il peut être avantageux de travailler en présence de méthylaluminoxane pour éviter la formation de réticulat.

Les catalyseurs mentionnés précédemment sont avantageusement utilisés en quantité catalytique, notamment à raison de moins de 5 %, en particulier de 1 à 5% en mol par rapport au nombre total de motifs de formule (I) et (II) dans le copolymère A.

Le taux de couplage entre le copolymère halogéné et le composé de formule YH peut être total ou partiel, selon les conditions opératoires, en particulier en fonction de la quantité (excès ou défaut) de formule YH introduite par rapport au nombre total de motifs de formule (I) et (II). Ainsi, en fonction de ces conditions, le produit final peut comprendre à la fois des motifs récurrents halogénés de formule (I) et (II) et des motifs récurrents modifiés de formule (V) et (VI).

Des motifs insaturés de formules (III) ou (IV) peuvent également être présents, préservés au cours de la réaction entre le polymère A et le composé YH, qui pourront par exemple permettre une éventuelle réticulation ultérieure.

Les copolymères fonctionnalisés B où Y représente un groupe aryle substitué par un groupe de formule -(W₁-W₂)ₚ peuvent être obtenus en formant le groupe -(W₁-W₂)ₚ in situ. En effet, dans les conditions de greffage d'un groupe hydroxyaryle, il est possible de condenser sur ce dernier des oléfines réactives, par exemple le dicyclopentadiène ou des terpènes, du styrène et des dérivés vinyliques ou greffer ainsi sur le polymère des parties résiniques permettant de les compatibiliser avec des résines améliorant l'adhérence par exemple, ou favoriser l'adhérence par augmentation de l'énergie de surface.

Il est également possible de condenser dans des conditions adéquates du formol et du phénol, des acides gras ou résiniques, pour constituer les parties résiniques précitées.

A cet égard, l'invention a également pour objet un procédé pour la préparation d'un copolymère comprenant au moins un motif récurrent choisi parmi ceux de formule (Va) et (VIa) 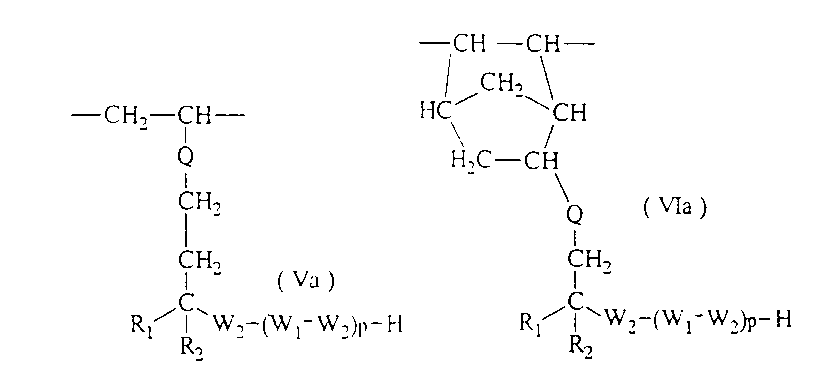 dans lesquelles Q, R₁ et R₂ sont tels que définis précédemment, W₁ désigne un groupe éthylène, éventuellement substitué par un groupe alkyle en C₁-C₈ , alcényle en C₂-C₁₂, aryle en C₆-C₂₂, alkylaryle en C₇-C₃₀ ou aralkyle en C₇-C₃₀, W₂ désigne un groupe arylène en C₆-C₂₂, éventuellement substitué par un groupe alkyle en C₁-C₈, aryle en C₆-C₂₂, alkylaryle en C₇-C₃₀ ou aralkyle en C₇-C₃₀ et p est un entier de 1 à 10,
procédé dans lequel on fait réagir
un copolymère poly(oléfine-diène) A comprenant au moins un motif récurrent choisi parmi ceux de formule (I) et (II) dans lesquelles X représente un atome d'halogène, avec un composé aromatique de formule HO-W₂-H dans laquelle W₂ est tel que défini ci-dessus,
en présence d'un acide de Lewis, et
d'une oléfine de formule H-W₁-H comprenant au moins une double liaison, éventuellement substituée par un groupe alkyle en C₁-C₈, alcényle en C₂-C₁₂, aryle en C₆-C₂₂, alkylaryle en C₇-C₃₀ ou aralkyle en C₇-C₃₀.

Cette oléfine peut être choisie notamment parmi le dicyclopentadiène ou des terpènes, du styrène ou des dérivés vinyliques.

La fonctionnalisation des copolymères A en copolymères B peut se faire en plusieurs étapes. Ainsi, lorsque Y représente un groupe alkylaryle, notamment toluyle ou alkylphényle, il est possible, par exemple de substituer un atome d'hydrogène du groupement méthyle ou alkyle par un atome d'halogène. La fonctionnalisation par des groupements notamment les alcools ou les esters est alors réalisable et peut permettre une réticulation ultérieure, par voie chimique (à l'aide d'isocyanates, ou d'acide notamment) ou par rayonnement (sur des groupements acrylate ou époxyde, par exemple).

Il est à noter que les polymères B peuvent également être obtenus en faisant réagir le composé YH directement sur un copolymère T dont le motif récurrent dérivé de diène répond à au moins l'une des formules (III) et (IV), dans des conditions similaires à celles précédemment décrites pour la réaction avec le polymère A, notamment en ce qui concerne le catalyseur.

En particulier, le greffage d'un groupe aryle éventuellement substitué peut être avantageusement catalysé par un acide de Lewis, à une température de -50 à 90°C.

Les copolymères selon l'invention comprenant un motif récurrent de formule (I) ou (II) dans laquelle X représente un atome d'halogène peuvent également être utilisés pour réaliser le greffage d'autres chaînes polymères au bout des chaînes latérales.

A cet égard, l'invention a également pour objet un copolymère polyoléfinique de type poly(oléfinediène), caractérisé en ce qu'il comprend au moins un motif récurrent choisi parmi ceux de formule (VII) et (VIII) 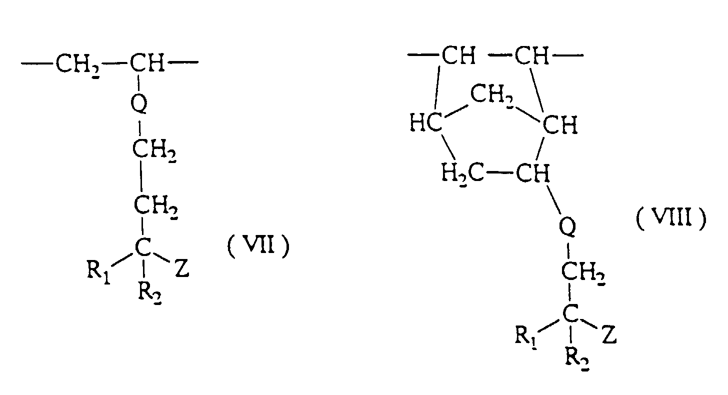 dans lesquelles Q, R₁ et R₂ sont tels que définis précédemment,
et Z représente une chaîne polymère dérivée d'un monomère M choisi parmi les molécules adaptées à la polymérisation cationique, notamment des oléfines mono ou polyinsaturées, en particulier en C₄-C₂₀ ou des composés aromatiques en C₆-C₂₂.

La chaîne polymère Z est de préférence de type polyoléfinique, par exemple dérivée du styrène ou de terpènes. On peut citer en particulier des chaînes de polystyrène, de polyméthylstyrène, poly(β-pinène) ou polyindène.

La masse molaire de la chaîne Z peut être très variable, notamment de 200 à 200 000 g/mol, dans la limite du contrôle du caractère vivant de la polymérisation.

Les copolymères greffés de ce type peuvent être utilisés pour combiner dans une même macromolécule les propriétés spécifiques de polymères particuliers, ou bien pour leurs propriétés d'agents émulsifiants dans des mélanges polymères.

Ce greffage peut être réalisé par réaction du copolymère halogéné selon l'invention, soit avec une chaîne polymère déjà constituée, soit par polymérisation de la chaîne greffée directement sur le copolymère halogéné.

Dans ce dernier cas, des conditions réactionnelles permettant une polymérisation cationique à caractère vivant sont préférentiellement utilisées, en faisant réagir le copolymère halogéné selon l'invention avec un monomère de greffage.

On opère notamment en présence d'un agent stabilisant des centres cationiques propagateurs habituellement utilisé pour ce type de polymérisation. Cet agent peut également avoir un rôle de desséchant, comme un alkyl aluminium, ce qui permet d'éliminer in situ les impuretés de type protonique capables de conduire à la formation parasite d'homopolymères dérivés du monomère de greffage.

L'invention a donc également pour objet un procédé pour la préparation d'un copolymère poly(oléfinediène) C, comprenant au moins un motif récurrent choisi parmi ceux de formule (VII) et (VIII) 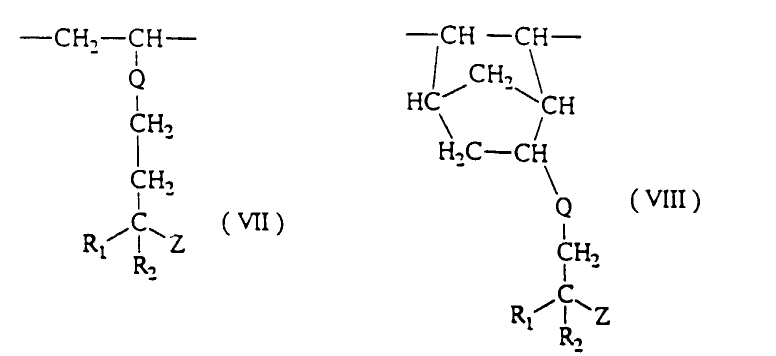 dans lesquelles Z représente une chaîne polymère dérivée d'un monomère M choisi parmi les molécules adaptées à la polymérisation cationique,
et comprenant éventuellement un motif récurrent choisi parmi ceux de formule (III) et (IV) 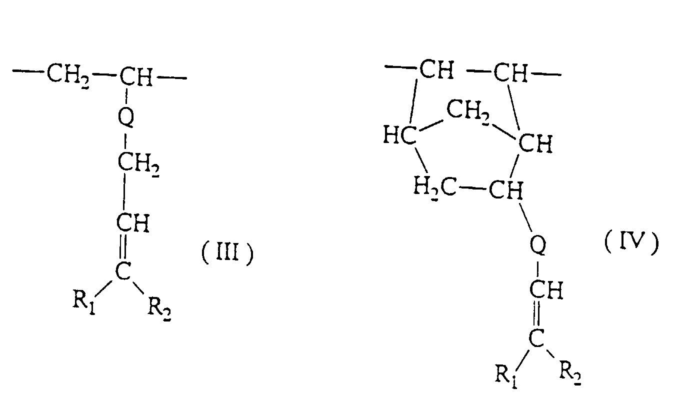 formules dans lesquelles R₁, R₂ et Q sont tels que définis précédemment,
procédé dans lequel on fait réagir un copolymère poly(o-léfine-diène) A comprenant au moins un motif récurrent choisi parmi ceux de formule (I) et (II) dans lesquelles X représente un atome d'halogène, avec un monomère M, en présence d'un acide de Lewis.

Avantageusement, la réaction a lieu dans un solvant relativement polaire, comprenant notamment un hydrocarbure halogéné, par exemple du dichlorométhane, et de préférence à une température de -50 à -15°C .

L'acide de Lewis est de préférence un acide de Lewis fort tel que TiCl₄ ou AlCl₃.

Le monomère de copolymérisation est avantageusement un monomère de type oléfinique, par exemple, un monomère de styrène, de méthylstyrène, de β-pinène, d'indène.

La quantité de monomère introduite est très variable et est avantageusement de 2 à 200 moles de monomère M par mole de motif de formule (I) et (II) dans la limite du caractère vivant de la polymérisation.

Le taux de greffage peut être ajusté de manière connue en soi, notamment par l'intermédiaire de la quantité de catalyseur et de monomère utilisée, de sorte que le copolymère final ne contienne plus de motif halogéné de formule (I) ou (II) après conversion totale en motifs greffés de formule (VII) ou (VIII), ou bien que le copolymère final comprenne à la fois des motifs halogénés de formule (I) ou (II), et des motifs greffés de formule (VII) ou (VIII).

Les exemples suivants illustrent l'invention.

Dans tout ce qui suit, l'abréviation 5,7-DMO désigne le 5,7-diméthylocta-1,6-diène.

Les polymères sont caractérisés par résonance magnétique nucléaire (RMN) du ¹H et du ¹³C, par Chromatographie d'Exclusion Stérique (SEC) par rapport à un étalon de polystyrène et par analyse enthalpique différentielle (DSC).

### EXEMPLES

Les différents monomères utilisés pour la synthèse de copolymères greffés à savoir le styrène, et ses dérivés alkylés ou vinyliques, l'isobutène, l'isoprène et les oléfines polymérisables, les terpènes cycliques ou non, sont distillés sur hydrure de calcium et manipulés sous azote.

### EXEMPLE 1 :

### Synthèse de poly(éthylène-co-propylène-co-5,7-DMO)

On a introduit 270 ml d'heptane anhydre dans un réacteur de 1,4 1 puis on a ajouté respectivement 0,14 mol de 5,7-DMO et 6.10⁻⁴ mol de AlMe₃. Le réacteur a été relié à un flacon de garde contenant un mélange de 1,5. 10⁵ Pa d'éthylène et 3,5.10⁵ Pa de propylène. Il a été saturé par 5.10⁵ Pa de mélange éthylène/propylène (3/7) sous agitation (500tr/min) à 20°C.

Une solution catalytique contenant 4,8.10⁻⁶ mol de Et(Ind)₂ZrCl₂ associé à 1,2.10⁻² mol de méthylaluminoxane a été ajoutée au milieu réactionnel par l'intermédiaire d'un sas pressurisé. La polymérisation a été suivie par la chute de la pression dans le réacteur et arrêtée au bout de 30 minutes. L'activité du système catalytique dans ces conditions a été de 4,6.10⁶ g/mol Zr/h.

Le polymère a été précipité directement dans un mélange de méthanol/hexane (2/1) contenant 0,1 % de HCl et séché sous vide primaire à 60°C pendant 24 h.

Le terpolymère obtenu présente une masse au pic déterminée par SEC de 95 000 g/mol et une composition molaire de 8 % en 5,7-DMO, 53 % en propylène et 39 % en éthylène.

### EXEMPLE 2 :

### Hydrochloration des insaturations du poly(éthylène-co-propylène-co-5,7-DMO)

### Exemple 2a

On a introduit dans le réacteur 3g de produit de l'exemple 1 qui contient 24 % massique de motifs diéniques soit 4,25.10⁻³ mol d'insaturation. Le polymère a été solubilisé dans 120 ml d'heptane anhydre sous agitation à température ambiante. On a ensuite ajouté successivement 5 équivalents (par rapport aux insaturations) de Et₃SiH (3,2 ml) et de SnCl₄ (2,5 ml). La réaction a été arrêtée au bout de 20 minutes.

La solution a été filtrée et le polymère précipité dans du méthanol. Le dosage par RMN du ¹H et du ¹³C ont permis d'évaluer le taux d'hydrochloration des insaturations à 70 % dans ces conditions.

Le chromatogramme SEC du polymère montre qu'il n'y a pas eu d'évolution des masses molaires pendant la réaction (masse au pic Mₚ=95000 g/mol, I=1,8).

### Exemple 2b

On a introduit dans le réacteur 3g de produit de l'exemple 1 qui contient 24 % massique de motifs 5,7-DMO soit 4,25.10⁻³mol d'insaturation. Le polymère a été solubilisé dans 120 ml d'heptane anhydre sous agitation, à température ambiante. On a ensuite ajouté 10 équivalents (par rapport aux insaturations) de MeEt₂SiH (6 ml) et de SnCl₄ (5 ml). La réaction a été arrêtée au bout de 20 minutes.

La solution a été filtrée et le polymère précipité dans du méthanol. Dans ces conditions, l'hydrochloration des insaturations a été totale.

Aucune évolution des masses molaires n'a été observée.

### Exemple 2c

On a introduit dans le réacteur 3g de produit de l'exemple 1 qui contient 24 % massique de motifs 5,7-DMO soit 4,25.10⁻³ mol d'insaturation. Le polymère a été solubilisé dans 50 ml d'heptane anhydre sous agitation, à température ambiante. On a ensuite ajouté 42 mg de SnCl₂ 2H₂O (soit 1,7,10⁻⁴ mol) dans le milieu réactionnel qui a été ensuite placé à 40°C. La saturation du milieu par barbotage d'acide chlorhydrique a été effectuée sur une heure par intervalles de 5 minutes. La réaction a été arrêtée au bout de 3 heures.

Le polymère a été filtré et précipité dans du méthanol.

L'analyse par RMN du ¹H et du ¹³C a permis de mettre en évidence que l'hydrochloration des insaturations a été totale dans ces conditions opératoires. Aucune évolution des masses molaires n'a été observée par SEC.

### EXEMPLE 3 :

### Synthèse de poly(éthylène-co-propylène-co-5,7-DMO-g-styrène)

### Exemple 3a

Le produit de l'exemple 2a a été solubilisé dans un mélange toluène/dichlorométhane (70/30) sous atmosphère inerte et à température ambiante. La concentration en fonctions chloro tertiaires dans le milieu a été de 0,022 mol/l. On a ensuite ajouté successivement un agent desséchant, le triméthylaluminium (0,0005 mol/l), afin de limiter les réactions parasites, du styrène (0,215 mol/l) et du chlorotétrabutylammonium, espèce servant à stabiliser les centres actifs. Le milieu a été ensuite placé à -15°C et on a enfin introduit l'acide de Lewis TiCl₄ (0,25 mol/l) dans le milieu réactionnel.

La réaction a été stoppée au bout de 14h par ajout de méthanol ammoniacal et le polymère précipité dans l'acétone afin d'éliminer l'homopolystyrène formé. La phase soluble dans l'acétone a été concentrée puis précipitée dans le méthanol. Le taux de conversion du styrène s'élève à 35 % dont 85 % sont greffés sur les chaînes du copolymère EPDM. La composition massique du copolymère greffé, dosée par RMN, est constituée de 65% d'EPDM et de 35 % de polystyrène.

Le copolymère greffé présente une masse au pic, déterminée par SEC, de 150 000 g/mol alors que celle-ci est de 95000 g/mol pour l'EPDM chloré. la température de transition vitreuse passe de -50°C pour l'EPDM chloré à -20°C pour le copolymère greffé.

### Exemple 3b

Le produit de l'exemple 2c a été solubilisé dans un mélange toluène/dichlorométhane (50/50) sous atmosphère inerte et à température ambiante. La concentration en groupes chloro tertiaires dans le milieu est de 0,022 mol/l. On a ensuite ajouté du triméthylaluminium (0,005 mol/1), du styrène (0,25 mol/l) et du chlorotétrabutylammonium (0,55 mol/l). Le milieu est ensuite placé à -30°C. On a enfin introduit TiCl₄ (0,25 mol/l) dans le milieu réactionnel. La réaction a été stoppée au bout de 4h par ajout de méthanol ammoniacal et le polymère a été précipité dans l'acétone. La phase soluble dans l'acétone contenant uniquement l'homopolystyrène formé a été concentrée puis précitée dans le méthanol.

Le taux de conversion du styrène s'élève à 60 % dont 90 % sont greffés sur les chaînes d'EPDM. La composition massique révélée par la RMN du ¹H est de 55 % d'EPDM pour 45 % de polystyrène. Le copolymère greffé présente une masse au pic de 170000 g/mol (au lieu de 95000 g/mol pour l'EPDM chloré).

### Exemple 3c

L'hydrochloration totale d'un EPDM (masse au pic Mp = 85000 g/mol) contenant 1 % molaire de 5,7-DMO a été réalisée.

370 mg de l'EPDM hydrochloré obtenu ont été solubilisés dans un mélange toluène/dichlorométhane (40/60) sous atmosphère inerte et à température ambiante. la concentration en fonctions chloro tertiaires est alors de 3.10⁻³ mol/l. On a ensuite ajouté successivement de la 2,6-ditertbutylpyridine (7.10⁻² mol/l) et du styrène (0,9 mol/l). Le réacteur a été placé à -50°C et on a ajouté TiCl₄ (0,18 mol/l). La réaction est stoppée au bout de 14h. La solution a été filtrée puis le polymère précipité dans le méthanol et séché à 60°C pendant 24h sous vide primaire.

Le taux de conversion de styrène est de 75% et le chromatogramme SEC prouve l'absence de formation d'homopolystyrène. La composition massique du copolymère greffé est de 60 % EPDM et de 40 % de polystyrène.

Le copolymère greffé, de masse au pic 150000 g/mol, présente deux températures de transition vitreuse: une à -50°C caractéristique de la phase élastomère et l'autre à +50°C représentative de la phase thermoplastique.

Le matériau ainsi obtenu se présente comme un élastomère thermoplastique.

### EXEMPLE 4 :

### Synthèse de poly(éthylène-co-propylène-co-5,7-DMO-g-β-pinène)

Le greffage du poly(β-pinène) a été effectué dans les conditions opératoires décrites pour l'exemple 3b. Dans ce cas, le taux de conversion du β-pinène est de 85 % avec un taux de greffage de 45 %. Les réactions de transfert sont plus importantes en présence du β-pinène que du styrène.

### EXEMPLE 5

### Synthèse de poly(éthylène-co-propylène-co-5,7-DMO-g-α-méthylstyrène)

L'EPDM hydrochloré de l'exemple 2c a été solubilisé dans un mélange toluène/dichlorométhane (40/60). La concentration en fonctions chloro tertiaires est de 2,5.10⁻² mol/l. On a ensuite ajouté successivement de la 2,6 ditertbutylpyridine (7.10⁻² mol/l) et l'α-méthylstyréne (1,925 mol/l). Le réacteur a été placé à -50°C et on a jouté SnCl₄ (0,39 mol/l). La réaction est stoppée au bout de 14h. La solution a été filtrée puis le polymère précipité dans le méthanol et séché à 60°C. pendant 24 h sous vide primaire.

Le taux de conversion de l'α-méthylstyrène est de 86 % et le chromatogramme SEC prouve l'absence de formation d'homopoly(α-méthylstyrène). La composition massique du copolymère greffé est de 10 % EPDM et de 90 % de poly(α-méthylstyrène). Le copolymère greffé présente une masse au pic de 332000 g/mol et une température de transition vitreuse de 60°C.

### EXEMPLE 6 :

### Synthèse de poly(éthyléne-co-propylène-co-5,7-DMO-g-indène)

Le greffage de chaînes de poly(indène) a été effectué dans les conditions opératoires décrites pour l'exemple 5.

Dans ce cas, le taux de conversion de l'indène est de 90 % et on note l'absence de formation d'ho-mopolyindène parasite.

La variation de la quantité d'indène introduite dans le milieu réactionnel a permis la synthèse de deux copolymères greffés présentant respectivement une masse au pic de 109 500 g/mol et 153 000 g/mol. Ces deux polymères présentent une température de transition vitreuse de 60°C.

### EXEMPLE 7 :

### Greffage de fonctions toluyle sur le poly(éthylène-co-propylène-co-5,7-DMO) hydrochloré

### Exemple 7a

370 mg d'EPDM hydrochloré de l'exemple 2c ont été solubilisés dans 10 ml de toluène à -30°C, pour obtenir une concentration en fonctions chloro tertiaires de 5.10⁻² mol/l. On a ensuite ajouté 3.10⁻⁴ mol de AlCl₃ dans le milieu réactionnel. La réaction a été arrêtée au bout de 7h par addition de méthanol ammoniacal. La solution a été lavée à l'eau jusqu'à pH neutre. Le polymère a ensuite été précipité dans l'acétone puis séché à 60°C sous vide primaire pendant 24h.

Le taux de substitution des atomes de chlore tertiaires par des fonctions toluyle est d'environ 50 %. A -30°C, aucune évolution des masses molaires n'a été constatée. On remarque l'apparition de ramifications voire de réticulation à des températures supérieures à -30°C dans ces conditions réactionnelles.

### Exemple 7b

370 mg d'EPDM hydrochloré de l'exemple 2c ont été solubilisés dans 10 ml de toluène à +50°C pour obtenir une concentration en fonctions chloro tertiaires de 10⁻² mol/l. On a ensuite ajouté 1 ml d'une solution à 10 % de méthylaluminoxane, soit 1,7.l0⁻³ mol. Le polymère a été récupéré au bout de 10h et précipité dans du méthanol contenant 1 % de HCl. Le taux de substitution des groupes chloro tertiaires par des fonctions toluyle est de 70 %. Aucune évolution des masses n'a été constatée.

### EXEMPLE 8 :

### Greffage de fonctions phénol sur le poly(éthylène-co-propylène-co-5,7-DMO) hydrochloré

370 mg d'EPDM hydrochloré de l'exemple 2c ont été solubilisés dans 20 ml d'heptane soit une concentration en fonctions chloro tertiaires de 2,5.10⁻² mol/l. On a ensuite ajouté 700 mg de phénol (soit 0,37 mol/l) dans le milieu réactionnel qui a été placé à 60°C. On a enfin introduit 0,4 ml de BF₃O(Et)₂ (soit 0,2 mol/l). La réaction a été stoppée au bout de 16h et la solution lavée à l'eau jusqu'à neutralité. La phase organique a été concentrée puis le polymère a été précipité dans du méthanol. Le taux de substitution de fonctions chloro tertiaires par des motifs phénol, déterminé par RMN du ¹H, a été d'environ 75 %.

### EXEMPLE 9 :

### Greffage de fonctions phénol sur le poly(éthylène-co-propylène-co-5,7-DMO)

370 mg d'EPDM de l'exemple 1 ont été solubilisés dans 20 ml d'heptane. On a ensuite ajouté 700 mg de phénol (soit 0,37 mol/l) dans le milieu réactionnel qui a été placé à 60°C. On a enfin introduit 0,4 ml de BF₃(OEt)₂ (soit 0,2 mol/l). La réaction a été stoppée au bout de 16 h et la solution lavée à l'eau jusqu'à neutralité. La phase organique a été concentrée puis le polymère a été précipité dans du méthanol. Le taux d'addition de motifs phénol sur les insaturations, déterminé par RMN du ¹H, a été d'environ 70 %. Les réactions de couplage de chaînes dans ces conditions ne sont pas détectables.

## Revendications

1. Copolymère polyoléfinique de type poly(o-léfine-diène), caractérisé en ce qu'il comprend au moins un motif récurrent choisi parmi ceux de formule (I) et (II) 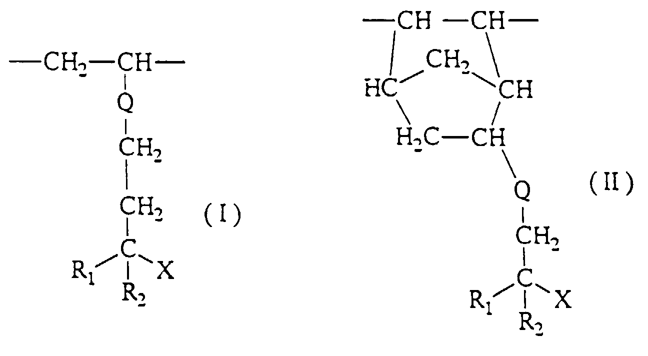 dans lesquelles Q est absent ou représente un groupe alkylène, linéaire ou ramifié, comportant au moins un atome de carbone,
R₁ et R₂ identiques ou différents, représentent chacun un groupe alkyle en C₁-C₈, et
X représente un atome d'halogène.

2. Copolymère selon la revendication 1, caractérisé en ce qu'il comprend en outre au moins un motif récurrent choisi parmi ceux de formule (III) et (IV) 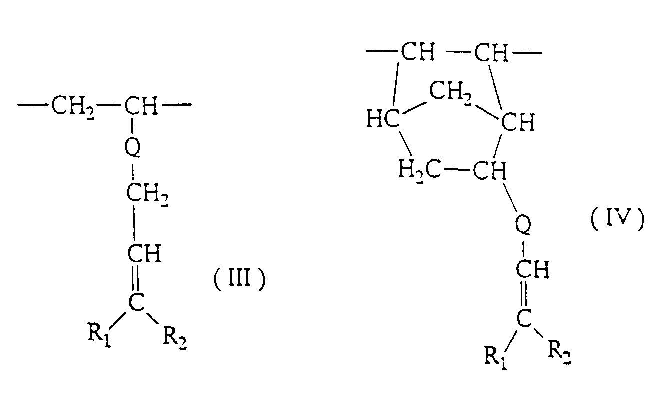 dans lesquelles R₁, R₂ et Q sont tels que définis dans la revendication 1.

3. Copolymère selon la revendication 1 ou 2, caractérisé en ce que le rapport molaire des motifs de formule (III) et (IV) au nombre total des motifs de formules (I) à (IV), (III+IV)/(I+II+III+IV) est de 0 à 99 %.

4. Copolymère selon l'une quelconque des revendications précédentes, caractérisé en ce que la proportion des motifs récurrents de formule (I) à (IV) représente 1 à 10 % en moles de la quantité totale de motifs récurrents dans ledit copolymère.

5. Copolymère selon l'une quelconque des revendications précédentes, caractérisé en ce qu'il comprend au moins un autre motif récurrent dérivé de monomères choisi parmi l'éthylène et le propylène.

6. Copolymère selon la revendication 5, caractérisé en ce qu'il comprend de 0 à 99,9 % en mol de motif récurrent dérivé d'éthylène, de 0 à 99,9 % en mol de motif récurrent dérivé de propylène et de 0,1 à 10 % en mol au total de motifs récurrents de formule (I) à (IV).

7. Copolymère selon l'une quelconque des revendications précédentes, caractérisé en ce que Q représente un groupe méthylène, éthylène, propylène, butylène, pentylène, hexylène, heptylène, octylène, linéaires ou ramifiés, éventuellement substitués.

8. Copolymère selon l'une quelconque des revendications précédentes, caractérisé en ce que R₁ et R₂, identiques ou différents sont choisis parmi les groupes éthyle et méthyle.

9. Copolymère selon l'une quelconque des revendications précédentes, caractérisé en ce que X représente un atome d'halogène choisi parmi le chlore, le brome, l'iode et le fluor.

10. Copolymère selon l'une quelconque des revendications 1 à 9, caractérisé en ce qu'il ne comprend pas de fraction réticulée.

11. Procédé pour la préparation d'un copolymère poly(oléfine-diène) A selon l'une quelconque des revendications 1 à 10,
caractérisé en ce qu'il comprend une étape d'hydrohalogénation d'un copolymère poly(oléfine-diène) T comprenant un motif récurrent choisi parmi ceux de formule (III) et (IV) 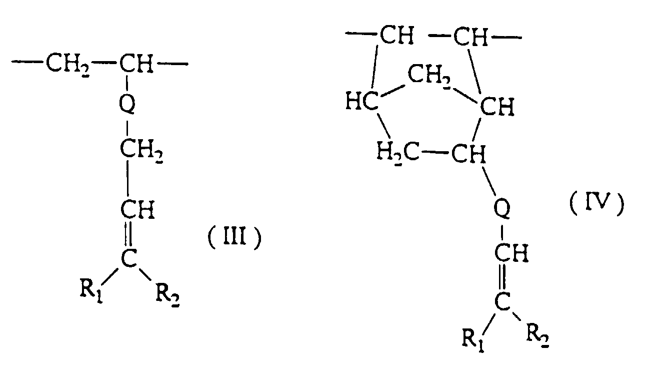 dans lesquelles Q, R₁ et R₂ sont tels que définis précé-demment,
en faisant réagir le copolymére T avec du tétrahalogénure d'étain Snx₄, où X a la signification précédente, et un silane de formule R₃SiH où R représente un groupe alkyle.

12. Procédé selon la revendication 11, caractérisé en ce que le rapport molaire SnX₄/R₃SiH est de 0,5 à 2, en ce que le nombre de moles de silane introduit est supérieur ou égal à 7 fois le nombre de moles de motifs (III) et (IV) dans le copolymère T et en ce que le copolymère A obtenu ne comprend pas de motif récurrent de formule (III) ou (IV).

13. Procédé selon la revendication 11, caractérisé en ce que le rapport molaire SnX₄/R₃SiH est de 0,5 à 2, en ce que le nombre de moles de silane introduit est inférieur à 7 fois le nombre de moles de motifs (III) et (IV) dans le copolymère T et en ce que le copolymère A obtenu comprend au moins un motif récurrent choisi parmi ceux de formule (III) et (IV).

14. Procédé pour la préparation d'un copolymère poly(oléfine-diène) A selon l'une quelconque des revendications 1 à 10,
caractérisé en ce qu'il comprend une étape d'hydrohalogénation d'un copolymère poly(oléfine-diène) T comprenant au moins un motif récurrent choisi parmi ceux de formule (III) et (IV) 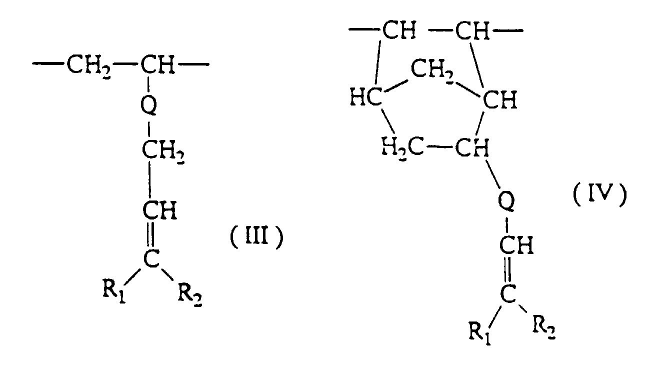 dans lesquelles Q, R₁ et R₂ sont tels que définis précédemment,
en faisant réagir le copolymère T avec un acide halohy-drique HX, où X a la signification précédente, en présence de dichlorure d'étain SnCl₂.

15. Copolymère polyoléfinique, de type poly(oléfine-diène), caractérisé en ce qu'il comprend au moins un motif récurrent choisi parmi ceux de formule (V) et (VI), 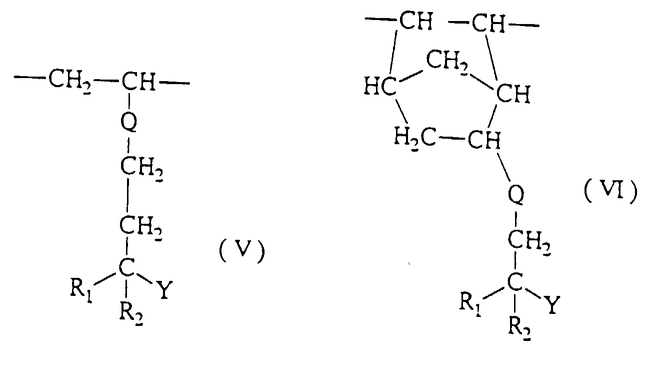 dans lesquelles Q est absent ou représente un groupe alkylène, linéaire ou ramifié, comportant au moins un atome de carbone,
R₁ et R₂ identiques ou différents, représentent chacun un groupe alkyle en C₁-C₈, et
Y est choisi parmi
(i) un groupe hydroxy,
(ii) un groupe R₃COO- où R₃ est un groupe alkyle en C₁-C₈ éventuellement substitué ; et
(iii) un groupe aryle mono ou polycyclique en C₆- C₂₂ éventuellement substitué par un atome d'halogène ou par un groupe alkyle en C₁-C₈, hydroxy, hydroxyalkyle en C₁-C₈, alcoxy en C₁-C₈, acyloxy en C₂-C₉ halogénoalkyle en C₁-C₈, aryloxy mono ou polycyclique en C₆-C₂₂, ou par un groupe de formule -(W₁ -W₂)ₚ où W₁ désigne un groupe éthylène, éventuellement substitué par un groupe alkyle en C₁-C₈, alcényle en C₂-C₁₂, aryle en C₆-C₂₂, alkylaryle en C₇-C₃₀ ou aralkyle en C₇-C₃₀, W₂ désigne un groupe arylène en C₆-C₂₂, éventuellement substitué par un groupe alkyle en C₁-C₈ , aryle en C₆-C₂₂, alkylaryle en C₇-C₃₀ ou aralkyle en C₇-C₃₀ et p est un entier de 1 à 10.

16. Copolymère selon la revendication 15, caractérisé en ce qu'il comprend en outre au moins un motif choisi parmi des motifs de formule (I), (II), (III) et (IV) telles que définis dans les revendications 1 et 2.

17. Procédé pour la préparation d'un copolymère poly(oléfine-diène) B selon l'une quelconque des revendications 15 et 16, caractérisé en ce que l'on fait réagir un copolymère poly(oléfine-diène) A selon l'une quelconque des revendications 1 à 10,
avec un composé de formule YH dans lequel Y est tel que défini à la revendication 15, en présence d'un catalyseur approprié.

18. Procédé pour la préparation d'un copolymère selon la revendication 15 ou 16, comprenant au moins un motif récurrent choisi parmi ceux de formule (Va) et (VIa) 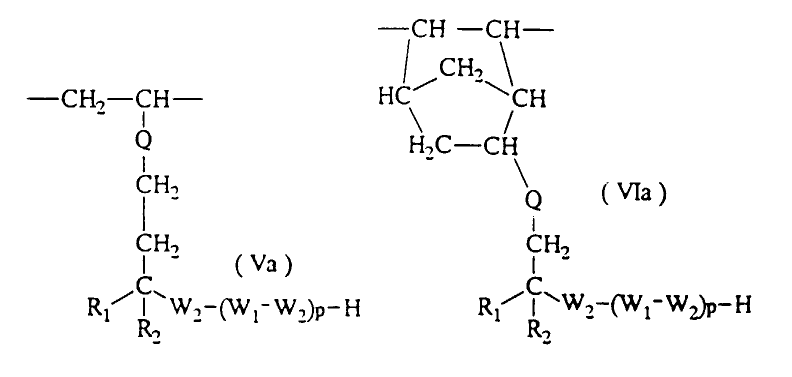 dans lesquelles Q, R₁ et R₂ sont tels que définis précé-demment,
W₁ désigne un groupe éthylène, éventuellement substitué par un groupe alkyle en C₁-C₃ , alcényle en C₂-C₁₂, aryle en C₆-C₂₂, alkylaryle en C₇-C₃₀ ou aralkyle en C₇-C₃₀, W₂ désigne un groupe arylène en C₆-C₂₂, éventuellement substitué par un groupe alkyle en C₁-C₈, aryle en C₆-C₂₂, alkylaryle en C₇-C₃₀ ou aralkyle en C₇-C₃₀ et p est un entier de 1 à 10,
procédé caractérisé en ce que l'on fait réagir un copolymère poly(oléfine-diène) A selon l'une quelconque des revendications 1 à 10,
avec un composé aromatique de formule HO-W₂-H dans laquelle W₂ est tel que défini ci-dessus, en présence d'un acide de Lewis et
d'une oléfine de formule H-W₁-H comprenant au moins une double liaison, éventuellement substituée par un groupe alkyle en C₁-C₈, aryle en C₆-C₂₂, alkylaryle en C₇-C₃₀ ou aralkyle en C₇-C₃₀.

19. Copolymère polyoléfinique, de type poly(oléfine-diène), caractérisé en ce qu'il comprend au moins un motif récurrent choisi parmi ceux de formule (VII) et (VIII) 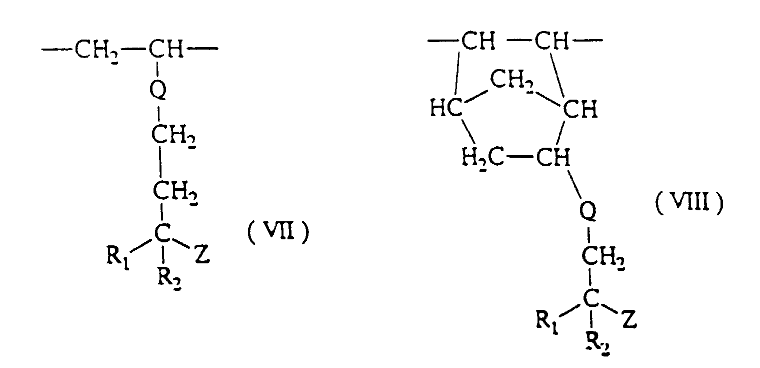 dans lesquelles Q est absent ou représente un groupe alkylène, linéaire ou ramifié, comportant au moins un atome de carbone,
R₁ et R₂ identiques ou différents, représentent chacun un groupe alkyle en C₁-C₈, et
Z représente une chaîne polymère dérivée d'un monomère M choisi parmi les molécules adaptées à la polymérisation cationique.

20. Copolymère selon la revendication 19, caractérisé en ce qu'il comprend en outre au moins un motif choisi parmi ceux de formule (I), (II), (III) et (IV) telles que définies dans les revendications 1 et 2.

21. Procédé pour la préparation d'un copolymère poly(oléfine-diène) C selon l'une quelconque des revendications 19 et 20,
dans lequel on fait réagir un copolymère poly(oléfine-diène) A, selon l'une quelconque des revendications 1 à 10, avec un monomère M, en présence d'un acide de Lewis.
